# EUROPÄISCHE PATENTSCHRIFT

(11) **EP 2 686 665 B1**
(45) Veröffentlichungstag und Bekanntmachung des Hinweises auf die Patenterteilung: **13.05.2015**
(21) Anmeldenummer: 12712924.5
(22) Anmeldetag: 28.02.2012
(51) Int. Cl.: G01N 21/31, G01N 21/69, F27B 3/28

(54) **VERFAHREN ZUR ERMITTLUNG EINES BETRIEBS- UND/ODER WERKSTOFFPARAMETERS IN EINEM ELEKTROLICHTBOGENOFEN UND ELEKTROLICHTBOGENOFEN**
METHOD FOR ASCERTAINING AN OPERATING AND/OR MATERIAL PARAMETER IN AN ELECTRIC ARC FURNACE AND ELECTRIC ARC FURNACE
PROCÉDÉ DE DÉTERMINATION D'UN PARAMÈTRE DE FONCTIONNEMENT ET/OU D'UN PARAMÈTRE DE MATÉRIAU DANS UN FOUR ÉLECTRIQUE À ARC, ET FOUR ÉLECTRIQUE À ARC

(30) Priorität: 16.03.2011 DE 102011014090
(43) Veröffentlichungstag der Anmeldung: 22.01.2014
(73) Patentinhaber: Georgsmarienhütte GmbH, 49124 Georgsmarienhütte (DE)
(72) Erfinder: KRÜGER, Klaus, 22179 Hamburg (DE); GALOCHKIN, Andrey, 82256 Fürsenfeldbruck (DE); DETTMER, Bernd, 49186 Bad Iburg (DE); LEHMKUHL, Andreas, 49124 Georgsmarienhütte (DE); SCHLINGE, Ludger, 49124 Georgsmarienhütte (DE)
(74) Vertreter: Busse & Busse
(86) Internationale Anmeldenummer: PCT/EP2012/000845
(87) Internationale Veröffentlichungsnummer: WO 2012/123066

(56) Entgegenhaltungen:
- EP-A1- 2 287 581
- GB-A- 867 973
- US-A- 4 986 658
- US-B1- 6 596 995

## Beschreibung

Die Erfindung betrifft ein Verfahren zur Ermittlung eines Betriebs- und/oder Werkstoffparameters in einem Elektrolichtbogenofen, bei dem sich in einem Bodengefäß befindliches schmelzflüssiges Material, insbesondere Stahl, mit mindestens einem Lichtbogen erhitzt wird, wobei der mindestens eine Lichtbogen zwischen mindestens einer Elektrode und dem schmelzflüssigen Material brennt, wobei mittels mindestens einer optischen Erfassungseinrichtung Licht des mindestens einen Lichtbogens und/oder Licht des schmelzflüssigen Materials erfasst wird, dass das Licht mittels einer Optik, insbesondere mittels mindestens eines Lichtwellenleiters, zu mindestens einem Spektrometer geleitet und in demselben erfasst und/oder ausgewertet wird, um den Betriebs- und/oder Werkstoffparameter zu bestimmen. Des weiteren betrifft die Erfindung einen Elektrolichtbogenofen.

Elektrolichtbogenöfen dieser Art sowie Verfahren zu deren Betrieb sind im Stand der Technik hinlänglich bekannt. Die GB 867 973 A offenbart eine solche Lösung. Eine ähnliche Ausgestaltung ist aus der US 6 596 995 B1 bekannt.

Der Lichtbogenöfen kann als Gleichstromofen mit einer Schmelzeelektrode und einer Bodenelektrode oder als Wechselstromofen mit drei Schmelzeelektroden ausgerührt sein. Zur Einhaltung einer definierten Lichtbogenlänge dient ein Elektrodenregler. Das Ofengefäß umfasst ein gemauertes oder gestampftes Bodengefäß aus Feuerfestmaterial, sowie ein mit Kühlelementen versehenes Obergefäß und einen schwenkbaren Deckel. Im Obergefäß sind häufig Hilfsbrenner (Betrieb mit Erdgas und Sauerstoff) vorgesehen. Bei auf geschwenktem Deckel können Schrott und Zusatzstoffe in den Ofen chargiert werden. Der Abstich des geschmolzenen Stahls erfolgt in eine Pfanne. Die Schlacke kann in einen Schlackenkübel abgelassen werden.

Beim Betrieb des Lichtbogenofens sind verschiedene Problemkreise zu beachten, um eine qualitativ hochwertige Stahlverarbeitung sicherzustellen sowie eine kostengünstige Produktion zu ermöglichen.

Ein frei brennender Lichtbogen, d. h. ein nicht von Schrott oder Schaumschlacke umhüllter Lichtbogen, führt zu einem erhöhten Verschleiß des Ofengefäßes und zu hohen Energieverlusten an die wassergekühlten Panels. Eine bewährte Abhilfe besteht darin, den Lichtbogen in schäumender Schlacke einzuhüllen, um so die Ofengefäßwände vor der Lichtbogenstrahlung abzuschirmen. Zusätzlich reduzieren die Schlackenanbackungen an den Wänden die thermischen Verluste sowie die thermische Belastung des Ofengefäßes.

Dabei ist es bekannt, den Grad der Lichtbogenabschirmung an Hand der Rücklauftemperaturen bzw. an Hand der Differenz zwischen Vor- und Rücklauftemperatur der wassergekühlten Panels abzuschätzen. Steigt die Temperatur schnell an, so ist die Ursache hierfür meist ein frei brennender Lichtbogen. Problematisch und nachteilig ist es dabei, dass die Rücklauftemperatur des Kühlwassers erst mit Zeitverzögerung ansteigt, nachdem nämlich die Schlackenanbackungen abgeschmolzen sind, da diese eine wärmeisolierende Wirkung haben.

Die Folge ist eine Verzögerung der Reaktionszeit um bis zu 3 Minuten, was zu erhöhten Energieverlusten und Verschleiß der Gefäßwände führt.

Um dieses Problem zu beheben, ist es bekannt geworden, den Luft- und Körperschall des Ofens auszuwerten und hieraus Erkenntnisse zu gewinnen. Der Nachteil der Auswertung des Luftschalls ist hier allerdings, dass an Hand der Signale nicht beurteilt werden kann, welche Stellen der Gefäßwand nicht abgeschirmt sind, da das Ofengefäß ein diffuses Schallfeld produziert. Die Information über die räumliche Verteilung der Wärmebelastung wäre insbesondere bei Drehstrom-Lichtbogenöfen relevant, da hier die Leistung jedes der drei Lichtbögen einzeln geregelt werden kann. Weiterhin stellen der Luft- und der Körperschall Hilfsgrößen dar, welche in komplexer Art und Weise von einer Vielzahl von Betriebsparametern, wie beispielsweise der Konsistenz der Schrottgattierung, abhängen. Damit ist insbesondere bezüglich der Abschirmung durch Schrott kein zuverlässiges Signal gegeben.

Ein weiterer Problemkreis betrifft die Temperatur des Stahlbades. Diese soll am Ende der Charge hoch genug sein, damit der flüssige Rohstahl nach Zugabe von Legierungselementen und beim Abstechen in die Pfanne nicht erstarrt.

Durch eine Temperaturmessung muss auch sichergestellt werden, dass der chargierte Schrott vollständig ausgeschmolzen ist. Auf der anderen Seite sollen der Energieverbrauch, die Stromflusszeit und damit die Schmelzfolgezeit möglichst gering sein. Deswegen soll die Temperatur des Stahlbades nicht höher als notwendig eingestellt werden. Hinzu kommt, dass eine zu hohe Temperatur einen erhöhten Feuerfestverschleiß mit sich bringt und Wartezeiten zum Abkühlen des Stahlbades verursachen kann.

Bekannt ist es, die Temperatur zu messen, indem durch die geöffnete Schlackentür des Ofens eine Messhülse mit einem Einweg-Thermoelement in das Stahlbad eingetaucht wird; dies erfolgt manuell oder mit Hilfe eines Lanzenmanipulators. Das elektrische Signal des Thermoelements ist dann proportional zur Temperatur des flüssigen Stahls.

Diese Messmethode hat verschiedene Nachteile. Zum einen dringt durch die geöffnete Schlackentür kalte Umgebungsluft (sog. Falschluft) ins Ofeninnere ein. Dies führt zu Energieverlusten und zu Erhöhung des Stickstoff-Gehaltes in der Ofenatmosphäre. Außerdem stellt jede manuelle Temperaturmessung ein Sicherheitsrisiko für das Bedienpersonal dar, da dieses in unmittelbarer Nähe des Ofens arbeiten muss. Schließlich verursacht diese Temperaturmessung hohe Betriebskosten, da für jede Messung eine neue Messhülse und ein Thermoelement notwendig sind. Hinzu kommt, dass die Probenentnahme sehr punktuell erfolgt und damit nur bedingt repräsentativ ist.

Ein dritter Problemkreis betrifft die Qualität des hergestellten Stahl. Die Qualität und die Sorte des Rohstahls werden im Wesentlichen durch den Kohlenstoffgehalt, die Konzentrationen von Legierungselementen (z. B. Nickel und Chrom) und der unerwünschten Begleitelemente (z. B. Phosphor und Schwefel) bestimmt. Daher ist es notwendig, die chemische Zusammensetzung des Stahlbades zu messen, um sie durch Zugabe von Schlackenbildnern, Sauerstoff, Feinkohle und Legierungselementen geeignet zu beeinflussen.

Die bisher genutzte Lösung zur Bestimmung der Stahlzusammensetzung besteht darin, eine Probe aus dem flüssigen Stahlbad mittels einer Messhülse zu entnehmen, was zusammen mit der oben erwähnten Temperaturmessung erfolgen kann. Diese Probe wird dann im Labor abgekühlt, geschliffen und anschließend mittels der Röntgen-Fluoreszenz-Methode untersucht.

Da die Masse der Probe nur einen Bruchteil der Gesamtmasse beträgt, ist eine große Abweichung vom Chargenmittelwert möglich.

Zum anderen ist die räumliche Verteilung der chemischen Zusammensetzung im Ofengefäß je nach Probenahmezeitpunkt mehr oder weniger inhomogen.

Gerade bei UHP-Öfen wird eine möglichst frühe probeentnahme anvisiert, wobei aber noch nicht alle Einsatzstoffe ausgeschmolzen sind. Der Zeitpunkt muss aber so gewählt sein, dass schon z. B. 80 % des Einschmelzgrades erreicht ist. Ist schon alles aufgelöst, wird die Schmelze auf Grund der hohen Trafoleistung sehr schnell heiß und die geplante Abstichtemperatur erreicht, bevor die Analyse eintrifft.

Die Schlacke muss zum Schäumen einen gewissen FeO-Anteil aufweisen. Das Ergebnis der Schlackenanalyse zur Metallprobe trifft nachteilig zumeist aber erst nach Schmelzeende ein und kann daher nicht mehr online genutzt werden.

Demgemäß ergibt sich, dass bei vorbekannten Elektrolichtbogenöfen die Bestimmung der Lichtbogenabschirmung, der Stahlbadtemperatur bzw. der chemischen Zusammensetzung des Stahlbades und der Schlacke (hier generell als Betriebs- bzw. Werkstoffparameter bezeichnet) aus den genannten Gründen problematisch bzw. mit den genannten Nachteilen behaftet ist.

Der Erfindung liegt daher die **Aufgabe** zugrunde, ein gattungsgemäßes Verfahren zur Ermittlung von Betriebs- bzw. Werkstoffparameter, insbesondere der Lichtbogenabschirmung, der Stahlbadtemperatur und der chemischen Zusammensetzungen von Stahlbad und Schlacke, zu schaffen, das die genannten Nachteile nicht aufweist. Demgemäß soll es in kostengünstiger, einfacher, schneller und genauer Weise möglich sein, die in Rede stehenden Parameter zu ermitteln. Hierfür soll eine entsprechende Verfahrensweise sowie ein Elektrolichtbogenofen vorgeschlagen werden, mit der bzw. mit dem dies ermöglicht wird.

Die **Lösung** dieser Aufgabe durch die Erfindung ist verfahrensgemäß dadurch gekennzeichnet, dass zwei optische Erfassungseinrichtungen verwendet werden, die über jeweilige Lichtwellenleiter das aufgenommene Licht (Bereich UV, VIS und IR) zu zwei Spektrometern leiten, wobei die eine optische Erfassungseinrichtung das Licht des Lichtbogens erfasst und wobei die andere optische Erfassungseinrichtung das Licht des schmelzflüssigen Materials (Stahl und/oder Schlacke) erfasst, wobei die beiden optischen Erfassungseinrichtungen in einem Gehäuse platziert werden, das in einem Wandungsbereich des Bodengefäßes angeordnet und dem Inneren des Lichtbogenofens zugewandt ist, und wobei die beiden Spektrometer in einem Aufnahmeraum platziert werden, der an oder in dem Wandungsbereich des Bodengefäßes angeordnet ist.

Dabei ist es möglich, im Spektrometer das erfasste Licht zu analysieren und die Daten zu einem Rechner zu leiten, der dann die benötigten Auswertungen zur Bestimmung der Betriebs- und/oder Werkstoffparameter vornimmt.

Für das vom Lichtbogen stammende Licht kann eine Analyse des Strahlungsspektrums durchgeführt werden, um den Grad der Lichtbogenabschirmung zu ermitteln.

Für das vom Lichtbogen bzw. von der Atmosphäre des Lichtbogenplasmas stammende Licht kann eine spektroskopische Analyse durchgeführt werden, um die Zusammensetzung des schmelzflüssigen Materials zu ermitteln.

Für das vom schmelzflüssigen Material stammende Licht kann eine Analyse des Strahlungsspektrums durchgeführt werden, um die Temperatur des schmelzflüssigen Materials zu ermitteln. Der Ansatz ist hier das Planksche Strahlungsgesetz, um die Temperatur zu bestimmen.

Der erfindungsgemäß vorgeschlagene Elektiolichtbogenofen zeichnet sich dadurch aus, dass zwei optische Erfassungseinrichtungen angeordnet sind, die über jeweilige Lichtwellenleiter mit zwei Spektrometern verbunden sind, wobei eine optische Erfassungseinrichtung zur Erfassung des Lichts des Lichtbogens ausgebildet und angeordnet ist und wobei eine optische Erfassungseinrichtung zur Erfassung des Lichts des schmelzflüssigen Materials ausgebildet und angeordnet ist, wobei die beiden optischen Erfassungseinrichtungen in einem Gehäuse angeordnet sind, das in einem Wandungsbereich des Bodengefäßes angeordnet und dem Inneren des Lichtbogenofens zugewandt ist, und wobei die beiden Spektrometer in einem Aufnahmeraum angeordnet sind, der an oder in dem Wandungsbereich des Bodengefäßes angeordnet ist.

Um die Optik frei von Staub zu halten und vor Schlackenspritzem zu schützen, sieht eine Fortbildung vor, dass das Gehäuse mit Mitteln zur Zuführung eines Gases, insbesondere von Druckluft, versehen ist. Hiermit kann die Optik (insbesondere die Linsen derselben) bei Bedarf freigeblasen werden.

Um die thermische Belastung gering zu halten, kann vorgesehen werden dass der Aufnahmeraum mit Mitteln zum Zu- und Abführen eines Kühlmediums, insbesondere von Wasser, versehen ist.

Die Erfindung schlägt also ein photobasiertes Messsystem vor, mit dessen Hilfe der Prozess der Elektrostahlerzeugung in einem Lichtbogenofen hinsichtlich der Energie- und Materialeffizienz erheblich verbessert werden kann.

Wie beschrieben, hat das System bevorzugt zwei optische Spektrometer, die mittels Lichtwellenleitern (LWL) und den an diesen angeschlossenen Linsen das Ofeninnere des Lichtbogenofens erfassen. Die Lichtwellenleiter können beispielsweise in einem Brennermodul montiert sein. Ein Lichtwellenleiter ist auf den Lichtbogen ausgerichtet und wird verwendet, die Lichtbogenabschirmung und die chemische Zusammensetzung des Rohstahls und der Schlacke zu erfassen. Der andere Lichtwellenleiter zielt auf das Stahlbad bzw. auf die Schlacke und erfasst dessen bzw. deren Temperatur.

Der Neigungswinkel der Lichtwellenleiter kann variabel angelegt sein. Die Spektrometer sind in einer wassergekühlten Box an der Ofenwand montiert und sind mit einem Rechner im Leitstand verbunden. Mittels eines Algorithmus (s. unten) werden die Signale der Spektrometer ausgewertet; hieraus werden die Temperatur des Stahlbades, die chemische Zusammensetzung des Rohstahls bzw. der Schlacke und der Grad der Lichtbogenabschirmung berechnet.

Sehr vorteilhaft ist, dass das Messsystem photobasiert arbeitet und für alle drei Parameter zugleich verwendet wird. Weiterhin ist es von Vorteil, dass alle drei Parameter kontinuierlich, also während der gesamten Schmelzfolgezeit, erfasst werden können. Dies stellt einen wesentlichen Unterschied zu den bekannten Verfahren dar, bei denen nur wenige Male pro Charge Messungen möglich sind.

Ein weiterer Vorteil des erfindungsgemäßen Vorschlags ist, dass die Messwerte kontinuierlich berechnet werden können und somit ein frei brennender Lichtbogen frühzeitig erkannt werden kann. So können die Ofenbediener rechtzeitig darauf reagieren, z. B. Kohle einblasen oder die Lichtbogenleistung reduzieren. Damit werden die Schlackenanbackungen an der Gefäßwand geschützt; der Verschleiß des Gefäßes und die Energieverluste an die Panels sinken. Außerdem kann ein zweiter Korb und gegebenenfalls folgende Körper früh genug chargiert werden, was die Schmelzfolgezeit reduziert und so die Produktivität erhöht.

Damit wird es auch möglich, die Energiezufuhr sofort einzustellen, sobald die gewünschte Abstichtemperatur erreicht ist. Da die Messung kontaktlos erfolgt, werden auch keine Messhülsen benötigt und die Betriebskosten werden entsprechend gesenkt. Schließlich kann bei der vorgeschlagenen Vorgehensweise die Schlackentür geschlossen bleiben, es entstehen also keine Energieverluste und keine Falschluft gelangt in das Ofeninnere.

Weiterhin ist es vorteilhaft, dass das entwickelte System kontaktlos arbeitet, also verschleiß- und wartungsfrei. Es entstehen sehr vorteilhaft ferner keine hohen Betriebskosten, wie z. B. für Messhülsen oder Einweg-Thermo-elemente.

Auch ist es von Vorteil, dass die Ofenbediener nicht auf die Auswertung der Probe warten müssen, sondern unmittelbar reagieren können. Weiterhin werden Kohle und Sauerstoff nicht mehr eingeblasen, sobald die gewünschte Zusammensetzung erreicht ist, was zu höherer Materialeffizienz führt.

Die Erfindung stellt also sehr vorteilhaft eine in-situ-Analyse des Rohstahls zur Verfügung, die die bisherigen Nachteile des Standes der Technik überwindet.

In der Zeichnung ist ein Ausführungsbeispiel der Erfindung dargestellt. Es zeigen:
- Fig. 1: schematisch einen Teil eines Elektrolichtbogenofens im Schnitt,
- Fig. 2: ein beispielhaftes Spektrum von Stahl mit atomischen Emissionslinien für Mangan, wobei die Intensität über der Wellenlänge aufgetragen ist,
- Fig. 3: den Anstieg der relativen Höhe der Mangan-Linie bei stufenweiser Erhöhung des Mangangehaltes im Stahlbad, wobei die relative Intensität über der Zeit aufgetragen ist,
- Fig. 4: eine Kalibrierkurve für Mangan, wobei die relative Intensität über dem prozentualen Mangan-Gehalt aufgetragen ist, und
- Fig. 5: ein Flussdiagramm eines Algorithmus für die Bestimmung der Stahlbadtemperatur, der Lichtbogenabschirmung und der chemischen Zusammensetzung des Rohstahls.

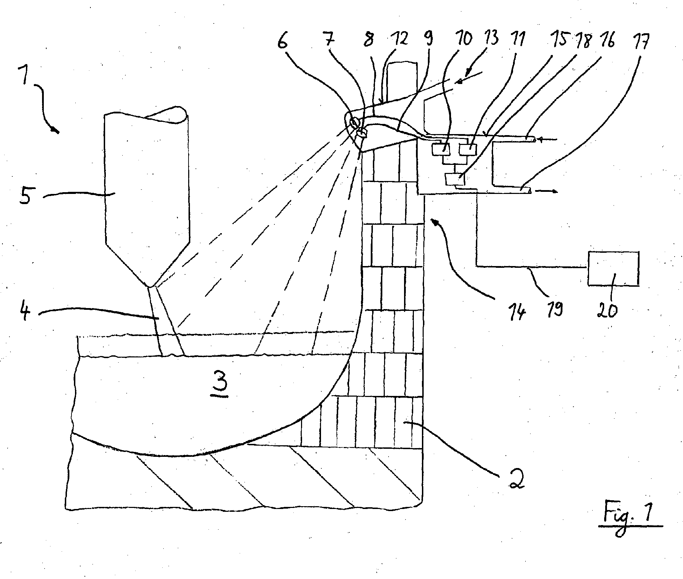

In Fig. 1 ist ein Elektrolichtbogenofen 1 schematisch skizziert. Dieser hat ein gemauertes Bodengefäß 2, in dem schmelzflüssiges Material 3, insbesondere in Form von Stahl, aufgenommen werden kann (bedeckt von einer Schlackeschicht). Eine Elektrode 5 ist oberhalb des Pegels des schmelzflüssigen Materials 3 angeordnet. In bekannter Weise wird durch Aufbau eines Potentials zwischen Elektrode 5 und Material 3 ein Lichtbogen 4 erzeugt, der den Schmelzprozess des Materials 3 hervorruft. Beispielsweise beträgt der Elektrodendurchmesser ca. 70 cm; die Höhe der Elektrode über dem Stahlbad kann in derselben Größenordnung liegen.

Wesentlich ist, dass oberhalb des Badspielgels in einem Gehäuse 12, das im Wandungsbereich 14 des Ofens angeordnet ist, zwei optische Erfassungseinrichtungen 6 und 7 vorhanden sind. Hierbei handelt es sich um Einrichtungen, die eine optische Linse umfassen, mit der es möglich ist, Licht - einmal vom Lichtbogen 4 und einmal vom schmelzflüssigen Material 3 - zu erfassen und gegebenenfalls zu bündeln. Dieses Licht wird über jeweilige Lichtwellenleiter 8 und 9 zu zwei Spektrometern 10 und 11 geleitet. Die Spektrometer 10, 11 stehen mit einem USB-Extender 18 in Verbindung, von dem aus über ein Kabel 19 (Ethernetkabel, Länge in der Größenordnung von 100 m) Signale zu einer Datenerfassungseinrichtung 20 (z. B. PC) in einen Leitstand geleitet werden.

Damit die Optik der Erfassungseinrichtungen 6, 7 sauber und frei bleibt, ist eine Druckluftleitung 13 vorgesehen, mit der es möglich ist, die Optik bei Bedarf freizublasen. Die Lichtwellenleiter 8, 9 sind ausschließlich im wassergekühlten Brennermodul montiert. Dort herrschen zumeist Temperaturen von höchstens 60 °C, was für die Lichtwellenleiter unkritisch ist. Über das Einblasen von Druckluft (oder auch von Stickstoff) wird die Optik nicht nur freigehalten, sondern auch gekühlt.

Die Spektrometer 10, 11 sind in einem Aufnahmeraum 15 untergebracht. Der Aufnahmeraum 15 ist mit einer Zulaufleitung 16 und mit einer Ablaufleitung 17 für Kühlwasser verbunden. Damit können die Spektrometer 10, 11 gekühlt werden, so dass sie keinen Schaden durch thermische Belastung aus dem Ofen 1 nehmen.

Das beschriebene System berechnet die Lichtbogenabschirmung durch die Analyse des Strahlungsspektrums des Lichtbogens. Der zugehörige Algorithmus (s. unten) verwendet dabei u. a. die gemessene Intensität, die Integrationszeit und das Histogramm der Wellenlängen und die Farbtemperatur (bzw. Schwarzkörpertemperatur). Da die optische Erfassungseinrichtung eine spezifische Position bzw. Region des Ofens erfasst, berechnet der Algorithmus die Lichtbogenabschirmung speziell für diese Seite. Werden mehrere optische Erfassungseinrichtungen eingesetzt, kann die räumliche Verteilung der Abschirmung ermittelt werden.

Das erläuterte System kann ferner die Temperatur augenblicklich und kontinuierlich durch die Analyse des Strahlungsspektrums des Stahlbades ermitteln. Werden die Messwerte der aktuellen Wirkleistung und der vertikalen Elektrodenposition berücksichtigt, so erhöht sich die Genauigkeit der Methode zusätzlich.

Das vorgeschlagene Verfahren ermöglicht es weiterhin, mittels spektroskopischer Analyse der Atmosphäre des Lichtbogenplasmas die chemische Zusammensetzung kontinuierlich zu berechnen und über die Zeit zu mitteln. So können einerseits Inhomogenitäten ausgeglichen werden. Andererseits ist die Stahlbad- und Schlackenzusammensetzung zu jedem Zeitpunkt bekannt und kann ggf. vorhergesagt werden, so dass die Ofenbediener rechtzeitig reagieren können.

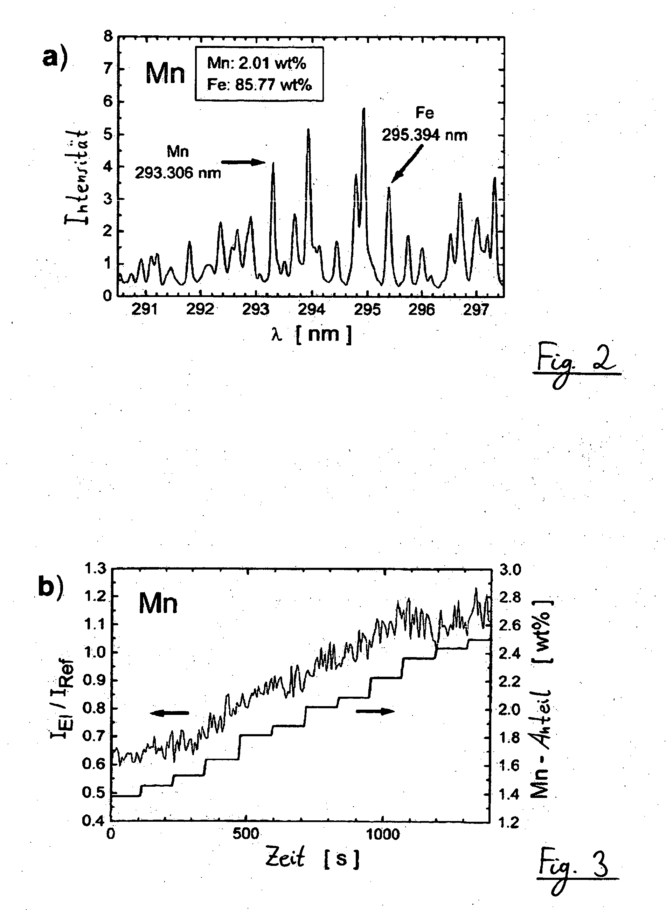

Die chemische Zusammensetzung des Rohstahls, also der Gewichtsanteil solcher chemischen Elemente wie Mangan, Chrom, Nickel und Kupfer, kann mit der Relativen-Linien-Methode bestimmt werden. Die relative Höhe einer elementspezifischen, atomischen Emissionslinie ist proportional zur Konzentration des jeweiligen Elements, bezogen auf eine benachbarte Emissionslinie des Eisens. Dies ist in Fig. 2 und in Fig. 3 illustriert. Wie in Fig. 2 gesehen werden kann, ist die Konzentration eines Elements proportional zur relativen Höhe seiner Emissionslinien. In Fig. 2 ist das Spektrum mit atomischen Emissionslinien zu sehen, die zur Mangan-Analyse verwendet werden. In Fig. 3 ist zu sehen, dass bei stufenweiser Erhöhung des Mangangehalts des Stahlbades die relative Höhe der Mangan-Linie proportional ansteigt.

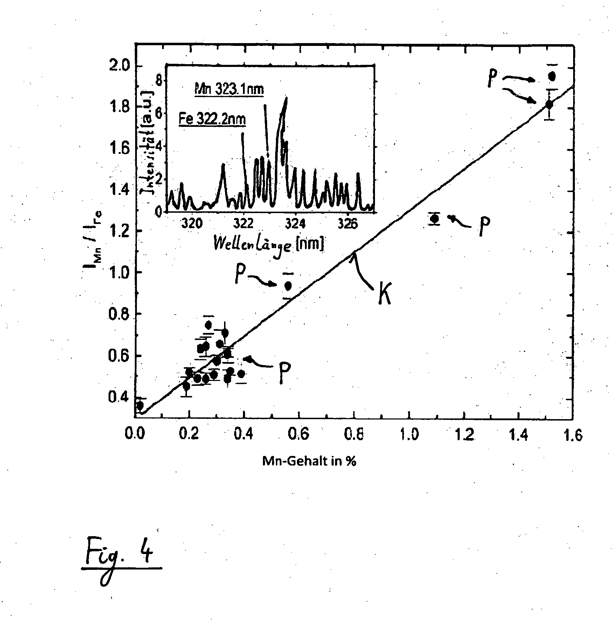

Werden Proben bekannter Zusammensetzung gemessen, so können daraus elementspezifische Kalibrierkurven erstellt werden, mit denen die Zusammensetzung unbekannter Proben bestimmt werden kann. Dies ist in Fig. 4 illustriert. Die hier eingezeichnete Kalibrierkurve (K) wird aus den einzelnen Messpunkten (P) abgeleitet. Im Beispielsfall werden folgende Emissionslinien verwendet: Mn: 323,1 nm, Fe: 322,2 nm.

Solche Kalibrierkurven sind für jedes zu untersuchende chemische Element zu erstellen und können dann bei der Bestimmung der chemischen Zusammensetzung des Bades eingesetzt werden.

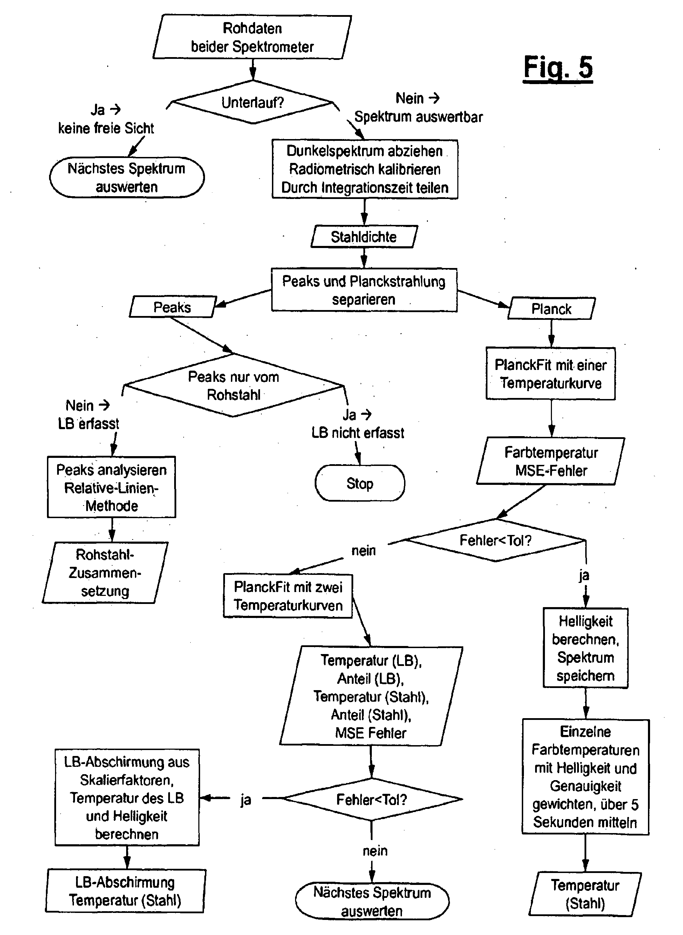

In Fig. 5 ist ein Flussdiagramm dargestellt, das den Algorithmus angibt, mit dem ausgehend vom gemessenen Licht einmal des Lichtbogens und einmal des Bades (d. h. ausgehend von den Rohdaten der beiden Spektrometer) die Lichtbogenabschirmung, die Temperatur des Bades und die Zusammensetzung des Rohstahls erfolgen kann.

Die Rohdaten der beiden Spektrometer 10 und 11 stellen die Eingangsgrößen für den Algorithmus dar. Nach Prüfung auf Brauchbarkeit der Daten erfolgt ein Abzug des Dunkelspektrums, eine radiometrische Kalibrierung und eine Teilung durch die Integrationszeit, was zur Strahldichte führt. Diese Daten werden aufgeteilt nach Peaks und Planckstrahlung.

Aus den Peaks werden nach nochmaliger Prüfung auf Brauchbarkeit die Werte nach der Relative-Linien-Methode ausgewertet, um die Rohstahlzusammensetzung zu bestimmen (s. oben).

Mittels der Planckstrahlung kann - sofern ein Fehlertoleranzband eingehalten wird - einerseits die Temperatur der Schmelze ermittelt werden, was aufgrund der ermittelten Schwarzkörpertemperatur möglich ist. Andererseits ist es mit diesen Daten auch möglich, die Lichtbogenabschirmung zu bestimmen. Zwei Spektrometer haben sich für die erläuterte Verfahrensweise bewährt. Es können aber auch grundsätzlich mehr Spektrometer eingesetzt werden, um eine höhere Messqualität zu erreichen, z. B. auch, um die räumliche Verteilung der Lichtbogenabschirmung zu bestimmen.

### Bezugszeichenliste:

- 1: Elektrolichtbogenofen
- 2: Bodengefäß
- 3: schmelzflüssiges Material (Stahl)
- 4: Lichtbogen
- 5: Elektrode
- 6: optische Erfassungseinrichtung
- 7: optische Erfassungseinrichtung
- 8: Lichtwellenleiter (Optik)
- 9: Lichtwellenleiter (Optik)
- 10: Spektrometer
- 11: Spektrometer
- 12: Gehäuse
- 13: Mittel zur Zuführung eines Gases (Druckluftleitung)
- 14: Wandungsbereich
- 15: Aufnahmeraum
- 16, 17: Mittel zum Zu- und Abführen eines Kühlmediums
- 16: Zulaufleitung
- 17: Ablaufleitung
- 18: USB-Extender
- 19: Kabel
- 20: Datenerfassungseinrichtung (PC)

## Patentansprüche

1. Verfahren zur Ermittlung eines Betriebs- und/oder Werkstoffparameters in einem Elektrolichtbogenofen (1), bei dem sich in einem Bodengefäß (2) befindliches schmelzflüssiges Material (3), insbesondere Stahl, mit mindestens einem Lichtbogen (4) erhitzt wird, wobei der mindestens eine Lichtbogen (4) zwischen mindestens einer Elektrode (5) und dem schmelzflüssigen Material (3) brennt, wobei mittels mindestens einer optischen Erfassungseinrichtung (6, 7) Licht des mindestens einen Lichtbogens (4) und/oder Licht des schmelzflüssigen Materials (3) erfasst wird, dass das Licht mittels einer Optik, insbesondere mittels mindestens eines Lichtwellenleiters (8, 9), zu mindestens einem Spektrometer (10, 11) geleitet und in demselben erfasst und/oder ausgewertet wird, um den Betriebs- und/oder Werkstoffparameter zu bestimmen,
**dadurch gekennzeichnet,**
**dass** zwei optische Erfassungseinrichtungen (6, 7) verwendet werden, die über jeweilige Lichtwellenleiter (8, 9) das aufgenommene Licht zu zwei Spektrometern (10, 11) leiten, wobei die eine optische Erfassungseinrichtung (6) das Licht des Lichtbogens (4) erfasst und wobei die andere optische Erfassungseinrichtung (7) das Licht des schmelzflüssigen Materials (3) erfasst,
wobei die beiden optischen Erfassungseinrichtungen (6, 7) in einem Gehäuse (12) platziert werden, das in einem Wandungsbereich (14) des Bodengefäßes (2) angeordnet und dem Inneren des Lichtbogenofens (1) zugewandt ist, und
wobei die beiden Spektrometer (10, 11) in einem Aufnahmeraum (15) platziert werden, der an oder in dem Wandungsbereich (14) des Bodengefäßes (2) angeordnet ist.

2. Verfahren nach Anspruch 1, **dadurch gekennzeichnet, dass** für das vom Lichtbogen (4) stammende Licht eine Analyse des Strahlungsspektrums durchgeführt wird, um den Grad der Lichtbogenabschirmung zu ermitteln.

3. Verfahren nach Anspruch 1, **dadurch gekennzeichnet, dass** für das vom Lichtbogen (4) bzw. von der Atmosphäre des Lichtbogenplasmas stammende Licht eine spektroskopische Analyse durchgeführt wird, um die Zusammensetzung des schmelzflüssigen Materials (3) zu ermitteln.

4. Verfahren nach Anspruch 1, **dadurch gekennzeichnet, dass** für das vom schmelzflüssigen Material (3) stammende Licht eine Analyse des Strahlungsspektrums durchgeführt wird, um die Temperatur des schmelzflüssigen Materials (3) zu ermitteln.

5. Elektrolichtbogenofen (1) mit einem Bodengefäß (2) zur Aufnahme von schmelzflüssigem Material (3) und mindestens einer Elektrode (5), in dem mittels mindestens eines Lichtbogens (4) zwischen der Elektrode (5) und dem schmelzflüssigen Material (3) das schmelzflüssige Material (3) erwärmt werden kann, wobei oberhalb des schmelzflüssigen Materials (3) mindestens eine optische Erfassungseinrichtung (6, 7) angeordnet ist, die zur Erfassung von Licht des mindestens einen Lichtbogens (4) und/oder von Licht des schmelzflüssigen Materials (3) ausgebildet ist, wobei weiterhin mindestens ein Spektrometer (10, 11) angeordnet ist, das zur Ermittlung eines Betriebs- und/oder Werkstoffparameters ausgebildet ist und wobei die mindestens eine optische Erfassungseinrichtung (6, 7) und das mindestens eine Spektrometer (10, 11) mittels einer Optik verbunden sind, insbesondere zur Durchführung des Verfahrens nach einem der Ansprüche 1 bis 4,
**dadurch gekennzeichnet,**
**dass** zwei optische Erfassungseinrichtungen (6, 7) angeordnet sind, die über jeweilige Lichtwellenleiter (8, 9) mit zwei Spektrometern (10, 11) verbunden sind, wobei eine optische Erfassungseinrichtung (6) zur Erfassung des Lichts des Lichtbogens (4) ausgebildet und angeordnet ist und wobei eine optische Erfassungseinrichtung (7) zur Erfassung des Lichts des schmelzflüssigen Materials (3) ausgebildet und angeordnet ist,
wobei die beiden optischen Erfassungseinrichtungen (6, 7) in einem Gehäuse (12) angeordnet sind, das in einem Wandungsbereich (14) des Bodengefäßes (2) angeordnet und dem Inneren des Lichtbogenofens (1) zugewandt ist, und
wobei die beiden Spektrometer (10, 11) in einem Aufnahmeraum (15) angeordnet sind, der an oder in dem Wandungsbereich (14) des Bodengefäßes (2) angeordnet ist.

6. Elektrolichtbogenofen nach Anspruch 5, **dadurch gekennzeichnet, dass** das Gehäuse (12) mit Mitteln (13) zur Zuführung eines Gases, insbesondere von Druckluft, versehen ist.

7. Elektrolichtbogenofen nach Anspruch 5, **dadurch gekennzeichnet, dass** der Aufnahmeraum (15) mit Mitteln (16, 17) zum Zu- und Abführen eines Kühlmediums, insbesondere von Wasser, versehen ist.

## Claims

1. Method for determining an operating and/or material parameter in an electric arc furnace (1), in which molten material (3), in particular steel, in a lower bowl (2) is heated by at least one arc (4), the at least one arc (4) burning between at least one electrode (5) and the molten material (3), light from the at least one arc (4) and/or light from the molten material (3) being detected by means of at least one optical detection device (6, 7), said light being guided, by means of an optical system, in particular by means of at least one optical waveguide (8, 9), to at least one spectrometer (10, 11) where it is detected and/or analysed in order to determine the operating and/or material parameter,
**characterised in that**
use is made of two optical detection devices (6, 7) which guide the absorbed light to two spectrometers (10, 11) by means of respective optical waveguides (8, 9), one of the optical detection devices (6) detecting the light from the arc (4) and the other optical detection device (7) detecting the light from the molten material (3), the two optical detection devices (6, 7) being positioned in a housing (12) which is arranged in a wall region (14) of the lower bowl (2) and faces the inner space of the arc furnace (1), and the two spectrometers (10, 11) being positioned in a receiving space (15) which is arranged on or in the wall region (14) of the lower bowl (2).

2. Method according to claim 1, **characterised in that** the radiation spectrum of the light from the arc (4) is analysed in order to determine the degree of arc shielding.

3. Method according to claim 1, **characterised in that** the light from the arc (4) or from the atmosphere of the arc plasma is spectroscopically analysed in order to determine the composition of the molten material (3).

4. Method according to claim 1, **characterised in that** the radiation spectrum of the light from the molten material (3) is analysed in order to determine the temperature of the molten material (3).

5. Electric arc furnace (1) comprising a lower bowl (2) for holding molten material (3) and at least one electrode (5), in which furnace the molten material (3) can be heated by means of at least one arc (4) between the electrode (5) and the molten material (3), at least one optical detection device (6, 7) being arranged above the molten material (3) and being designed to detect light from the at least one arc (4) and/or light from the molten material (3), at least one spectrometer (10, 11) also being arranged and designed to determine an operating and/or material parameter and the at least one optical detection device (6, 7) and the at least one spectrometer (10, 11) being connected by means of an optical system, in particular in order to carry out the method according to any of claims 1 to 4,
**characterised in that**
two optical detection devices (6, 7) are arranged and are connected to two spectrometers (10, 11) by means of respective optical waveguides (8, 9), one optical detection device (6) being designed and arranged to detect the light from the arc (4) and one optical detection device (7) being designed and arranged to detect the light from the molten material (3), the two optical detection devices (6, 7) being arranged in a housing (12) which is arranged in a wall region (14) of the lower bowl (2) and faces the inner space of the arc furnace (1) and the two spectrometers (10, 11) being arranged in a receiving space (15) which is arranged on or in the wall region (14) of the lower bowl (2).

6. Electric arc furnace according to claim 5, **characterised in that** the housing (12) is provided with means (13) for supplying a gas, in particular compressed air.

7. Electric arc furnace according to claim 5, **characterised in that** the receiving space (15) is provided with means (16, 17) for supplying and discharging a coolant, in particular water.

## Revendications

1. Procédé destiné à déterminer un paramètre de fonctionnement et/ou de matériau dans un four à arc électrique (1) où du matériau en fusion (3) contenu dans une cuve inférieure (2), notamment de l'acier, est chauffé à l'aide d'au moins un arc électrique (4) qui brûle entre au moins une électrode (5) et le matériau en fusion (3), où la lumière de l'arc électrique (4) et/ou du matériau en fusion (3) est captée par au moins un dispositif de détection optique (6, 7) et où la lumière est transmise par voie optique, notamment par au moins un câble à fibres optiques (8, 9), jusqu'à au moins un spectromètre (10, 11) qui la détecte et l'analyse pour déterminer le paramètre de fonctionnement et/ou de matériau, **caractérisé par le fait que** le procédé utilise deux dispositifs de détection optique (6, 7) qui transmettent la lumière captée par des câbles à fibres optiques respectifs (8, 9) à deux spectromètres (10, 11), l'un des dispositifs de détection optique (6) captant la lumière de l'arc électrique (4) et l'autre dispositif de détection optique (7) captant la lumière du matériau en fusion (3), les deux dispositifs de détection optique (6, 7) étant placés dans un boîtier (12) disposé au niveau de l'enveloppe (14) de la cuve inférieure (2) et orienté vers l'intérieur du four à arc électrique (1), et les deux spectromètres (10, 11) étant placés dans un espace d'enregistrement (15) disposé contre ou dans l'enveloppe (14) de la cuve inférieure (2).

2. Procédé selon la revendication 1, **caractérisé par le fait que** la lumière provenant de l'arc électrique (4) fait l'objet d'une analyse spectrométrique du rayonnement pour déterminer le degré de protection contre l'arc électrique.

3. Procédé selon la revendication 1, **caractérisé par le fait que** la lumière provenant de l'arc électrique (4) ou de l'atmosphère du plasma à arc électrique fait l'objet d'une analyse spectrométrique pour déterminer la composition du matériau en fusion (3).

4. Procédé selon la revendication 1, **caractérisé par le fait que** la lumière provenant du matériau en fusion (3) fait l'objet d'une analyse spectrométrique du rayonnement pour déterminer la température du matériau en fusion (3).

5. Four à arc électrique (1) avec une cuve inférieure (2) pour recevoir du matériau en fusion (3) et au moins une électrode (5), dans lequel il est possible de chauffer le matériau en fusion (3) à l'aide d'au moins un arc électrique (4) créé entre l'électrode (5) et le matériau en fusion (3), où un dispositif de détection optique (6, 7) est disposé au-dessus du matériau en fusion (3) et conçu pour capter la lumière de l'arc électrique (4) et/ou la lumière du matériau en fusion (3), le four comportant par ailleurs au moins un spectromètre (10, 11) conçu pour déterminer un paramètre de fonctionnement et/ou de matériau, le dispositif de détection optique (6, 7) et le spectromètre (10, 11) étant reliés par un câble à fibres optiques, notamment par l'application du procédé selon l'une des revendications 1 à 4,**caractérisé par le fait que** le four comporte deux dispositifs de détection optique (6, 7) qui sont reliés à deux spectromètres (10, 11) par des câbles à fibres optiques respectifs (8, 9), dont un dispositif de détection optique (7) est conçu et installé pour capter la lumière de l'arc électrique (4) et l'autre dispositif de détection optique (6) pour capter la lumière du matériau en fusion (3), les deux dispositifs de détection optique (6, 7) étant placés dans un boîtier (12) disposé au niveau de l'enveloppe (14) de la cuve inférieure (2) et orienté vers l'intérieur du four à arc électrique (1), et les deux spectromètres (10, 11) étant placés dans un espace d'enregistrement (15) disposé contre ou dans l'enveloppe (14) de la cuve inférieure (2).

6. Four à arc électrique selon la revendication 5, **caractérisé par le fait que** le boîtier (12) est équipé de moyens (13) pour amener un gaz, notamment de l'air comprimé.

7. Four à arc électrique selon la revendication 5, **caractérisé par le fait que** l'espace d'enregistrement (15) est équipé de moyens (16,17) pour amener et évacuer un fluide de refroidissement, notamment de l'eau.
